Europäisches Patentamt

(19) European Patent Office

Office européen des brevets

(11) Publication number : **0 259 373 B1**

(12) **EUROPEAN PATENT SPECIFICATION**

(45) Date of publication of patent specification : **24.04.91 Bulletin 91/17**

(21) Application number : **87901135.1**

(22) Date of filing : **04.02.87**

(86) International application number : **PCT/NO87/00011**

(87) International publication number : **WO 87/04768 13.08.87 Gazette 87/18**

(51) Int. Cl.⁵ : **F16L 57/00, F16L 59/00, F16L 1/12**

(54) INSULATION AND WEIGHT COATING FOR SUBSEA PIPELINES AND METHOD FOR PRODUCTION OF THE SAME.

(30) Priority : **06.02.86 NO 860408**

(43) Date of publication of application : **16.03.88 Bulletin 88/11**

(45) Publication of the grant of the patent : **24.04.91 Bulletin 91/17**

(84) Designated Contracting States : **DE FR GB SE**

(56) References cited :
CH-A- 600 234
DE-A- 2 051 596
DE-A- 2 544 194
DE-A- 2 751 945
GB-A- 1 549 847
GB-A- 1 573 814

(73) Proprietor : **NORSK HYDRO A.S.**
**Bygdoy Allé 2**
**N-0257 Oslo 2 (NO)**

(72) Inventor : **ERIKSEN, Erik, Hans**
**Lokesvei 6**
**N-3960 Stathelle (NO)**

(74) Representative : **Hitchcock, Esmond Antony et al**
**Lloyd Wise, Tregear & Co. Norman House**
**105-109 Strand**
**London WC2R 0AE (GB)**

Jouve, 18, rue Saint-Denis, 75001 PARIS

EP 0 259 373 B1

## Description

This invention relates to underwater pipelines and more particularly to an insulating coating therefor.

Underwater pipelines are mainly used for transporting hydrocarbons. In this case, it is important that the temperature within the pipelines does not fall below a certain level, otherwise hydrate and wax formation and deposition will occur. Therefore, an insulating coating is required to prevent heat loss from the hydrocarbons. Coatings fabricated from concrete and other traditional materials, which have poor insulating properties, are therefore unsuitable. The temperature of the hydrocarbons increases with the depth of the reservoirs. Development indicates production from even deeper reservoirs.

If the insulating material is to be directly exposed to seawater, low thermal conductivity and water absorption are important criteria for the selection of the material. Thermal conductivity must suitably be less than 0.2 $Wm^{-1}$ $K^{-1}$ and water absorption should be less than 5% after three days exposure and 10% during a longer period of time. High degrees of foaming of the plastic materials can also cause problems relating to water absorption.

Pipes suitable for reel-laying should be able to withstand longitudinal strains of at least 3%. Many of the stiff light foams which are presently used for insulation purposes do not meet this criterion. During operation, the radial strain of the pipeline should not exceed 5%. In addition, the durability of the material with regard to light, heat ageing etc, must be considered.

Underwater pipelines may also require a weight coating for two main purposes : firstly, to weigh the pipe down, and so maintain its position on the sea bed, and secondly, to provide a protective cover.

It is well known to use reinforced concrete as a weight coating for underwater pipelines. However cracks or damage to the concrete often occur, both during the pipe-laying process and afterwards, and ultimately these faults lead to the concrete coating falling off the pipeline. This is obviously an undesirable feature. Also, owing to its stiffness, concrete coating is unsuitable for laying continuous lengths of pipes using reel-laying techniques.

From British Patent No. 1573814 it is known to coat pipelines with a weight coating of elastic material, for example rubber containing iron powder and ore if desired. Rubber is an expensive material and in addition it has poor insulating qualities.

West German Patent Application No. 2544194 discloses a flexible pipeline where an inner pipe of synthetic rubber is coated with several layers of rubber, having steel bars incorporated therein. This coating does not insulate the pipe, the function of the synthetic resin being merely to pack the open structure of the steel bars.

GB-A-1549847 relates to a wrapping structure for protecting a pipe, particularly steel pipelines which may be subjected to impact by hard objects. The structure has a plurality of ribs, with a plurality of apertures between the ribs. It is made of flexible plastic material and is elongate so as to be wrapped around the pipe in a helical or longitudinal manner. The wrapping structure has a small area of surface contact with the pipe and at the same time provides a large overall passage for the flow of electrical current in the event of cathodic protection having to be used.

Only the ribs of the wrapping are in contact with the pipeline and the apertures can occupy from 40% to 90% of the area of the structure. Such a wrapping structure has no significant insulating properties at all.

Norwegian Patent No. 150771 describes a pipeline with weight coating where the coating is in the form of a composite material with granulated heavy metal ore cast into a matrix of thermoset and surrounded by a protecting sleeve of, for example, crossbonded polyethylene. The weight material represents the main part, about 85-95 percentage weight of the composite material. The outer sleeve is formed with mutually separated, radial inwardly directed knots or projections which allow the outer casing to be centred on to the steel pipe with mutual radial distance adjusted to the wanted thickness of the composite layer. The knots at the same time work to anchor the outer plastic pipe to the composite layer which at the same time adheres to the surface of the steel pipe in such a way that a relative displacement between the steel pipe and the whole casing is practically excluded. A pipe with weight coating is produced by threading the outer sleeve onto the steel pipe with the knots in contact with the surface of the steel pipe after which the composite mass is injected into and completely fills the annular space between the plastic sleeve and the steel pipe. This is hard to produce and can only be manufactured in short lengths. With the extent of filling (85-95%) as described earlier, the product will be very stiff and unsuitable for reel-laying.

Another known type of insulation comprises layers of rubber and PVC-foam. Preformed blocks of PVC or a PVC bandage are placed around the pipe and then rubber bandages are wrapped around, so securing the PVC. The rubber coating must then be vulcanized before the pipes can be used. This method gives pipes of good quality, but they are expensive to produce. The pipes also have reduced applications because of the thermal resistance of the PVC-foam (about 50-80°C).

It is an object of the invention to provide a coating for pipelines for underwater use which gives both good insulation and weight to the pipeline and which at the same time is easy to apply, preferably in a continuous manner.

A pipeline for underwater use in accordance with the invention has an insulating coating of foamed and/or compact polypropylene or polyvinyl chloride, the coating being in complete contact with the outer surface of the pipeline, or the surface of a corrosion resistant/adhesive coating applied thereto.

Such a pipeline is well insulated and may be heavy enough to maintain itself in a stationary position on the sea bed.

Polypropylene is non-hygroscopic and can easily be foamed to the wanted density. Polypropylene foam has sufficient stiffness for use down to depths greater than 100 m, and is thermally and dimensionally stable until about 140°C. Compact polypropylene is in itself a good insulator and has a thermal conductivity of 0.2 $Wm^{-1} K^{-1}$ PVC is a better insulator with a thermal conductivity of 0.15 $Wm^{-1} K^{-1}$. It is about 50% heavier than PP and has a density of 1.49 $g/cm^3$. PVC is however only thermally stable to about 80°C and is preferably used in compact form. Suitably a material of relatively high density is incorporated in the polypropylene or polyvinyl chloride, in order to increase the stability of the pipeline. The material may be a mineral of high density, preferably barium sulphate.

The insulating coating may comprise alternating layers of plastic with or without weight material incorporated therein, so meaning that a pipeline may be constructed to any particular requirements.

A method in accordance with the invention for the production of steel pipelines for underwater use comprises applying an insulating coating of foamed and/or compact polypropylene or polyvinyl chloride to the pipe by extrusion.

Such a method makes it possible to produce continuous lengths of pipe with an insulating coating and the pipeline produced may be laid by means of reels, so saving both time and money. Quality control can be carried out onshore and the welding and inspection of joints will become obsolete.

Preferably the extruded polypropylene or polyvinyl chloride has a material of relatively high density incorporated and alternating layers or polypropylene or polyvinyl chloride, with or without weight material incorporated, may be extruded onto the pipe.

The η polypropylene or polyvinyl chloride may be foamed by means of chemical foaming agents or may contain microspheres of plastic or glass.

The invention will now be described further by way of example with reference to the accompanying drawings in which :

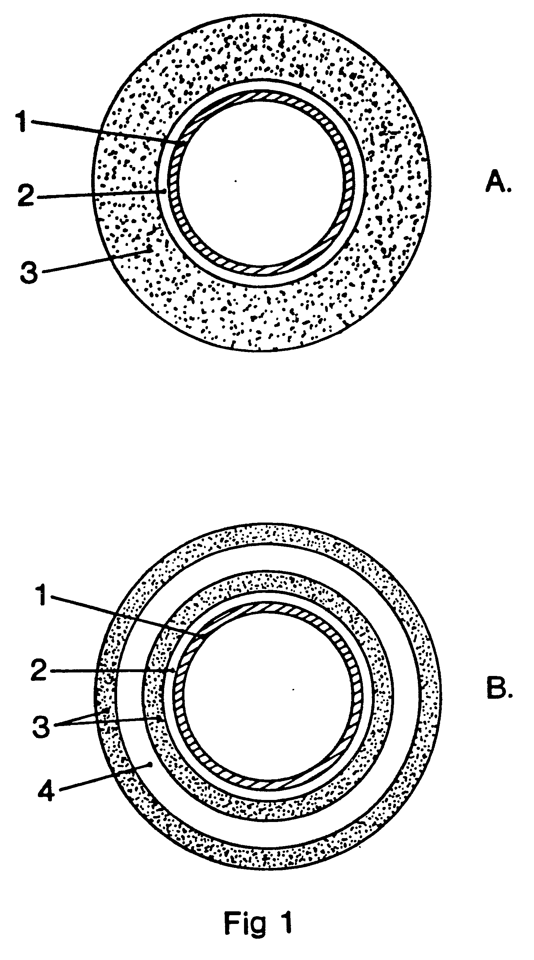

Figure 1A shows a pipeline with a combined insulation coating in accordance with the invention ;

Figure 1B shows a pipeline with the coating formed in layers.

A steel pipe 1 is first sandblasted and cleaned before a thin layer 2 of corrosion protection and/or adhesive is applied. In one example, the steel pipe 1 was treated with epoxy and with an adhesive layer of Admer Q B 540 (Mitsui). A PP-quality with high melt index, Hostalen PPR 1042 (Hoechst) and 1 part Genitron (50%) (Shearing) as foaming agent were used in the extrusion process. The gas released by heating the foaming agent is dissolved into the melt in the best possible way. In this way a foam with uniform foam structure and small cells is obtained. An alternative is to have the foaming agent incorporated into the raw material by the plastic producer.

The pipeline was heated to about 100°C before applying the coating 3 by continuous extrusion using conventional apparatus. The temperature was at least 160°C at the filling funnel, increasing to 230-240°C at the extruder and the pressure was about 100 bar. For a 6″ (15.3 cm) pipeline the thickness of the PP-layer was about 2″ (about 5 cm) and the adhesion to the steel was good. PP is in practice foamed up to 50% since higher degrees of foaming may lead to larger increases in the water absorption if the foaming is not uniform.

After the extrusion process the coated pipes are cooled with cold water both outside and inside. This is important to avoid sagging or ovality of the coating. A weight material is added to the plastic mass before extrusion.

In Figure 1B 3 indicates a layer filled with minerals and 4 is a compact or foamed thermoplastics layer. In order to produce a coating composed of several layers it is necessary to pass the pipe through the extruder many times. The advantages of this construction is that the properties of the pipeline can be tailored to particular needs.

The process of applying the coating by extrusion means that it is possible to produce continuous lengths of pipe, with no minimum length limitation.

The density of the pipeline (oil, gas, steel pipe, insulation etc.) should be in the order of 1100-1200 $kg/m^3$. The thickness of the coating, the degree of foaming of the plastic and also the content of weight material therefore is dependent on the diameter and the length of the pipe. For most ordinary oil pipelines the combination of the pipe and the insulating coating is generally heavy enough to maintain the pipeline in a stationary position on the sea bed. The addition of weight material therefore may not be necessary.

For a 6.2 km long underwater oil production pipeline with a diameter of about 15 cm the following conditions apply : to maintain temperatures above the hydrate formation temperature during a period of six hours after a line shutdown, one will need a heat transfer coefficient around 3 $Wm^{-1} K^{-1}$. This can be achieved by 6 cm of an insulation material with a thermal conductivity of 0.15 $Wm^{-1} K^{-1}$, which can be a 40% foamed polypropylene.

This invention provides an insulating layer which is easy to apply. By extrusion of thermoplastics onto the steel pipe continuous pipe lengths can be coated so making reel-laying possible. The layer is also suited for pipes of greater diameter and shorter lengths. By extrusion of the coating the layer can if wanted be built in layers of alternating foamed or compact plastic or plastic with filler to the required thickness, degree of insulation and weight. Pipelines thus can be tailored to suit individual needs.

It is also possible to produce pipelines with different profiles, for example a triangular profile for stability on the sea bed. This gives the possibility for combined solutions where several pipes can be gathered with one coating or where for example electrical signal cables or electrical powercables can be integrated into the pipe coating.

## Claims

1. A steel pipe for the transportation of hydrocarbons, the pipe having an outer insulating coating of thermoplastic characterized in that the coating (3, 4) of foamed and/or compact polypropylene or polyvinyl chloride is in complete surface contact with the outer surface of the pipe (1) or the surface of a corrosion resistant/adhesive coating (2) applied thereto.

2. A pipe according to Claim 1 characterised in that the coating has been applied by extrusion.

3. A pipe according to Claim 1 or 2 characterised in that a material of relatively high density is incorporated in the plastic to help to maintain the position of the pipeline on the sea bed.

4. A pipe according to Claim 3 characterised in that the material is a mineral of high density.

5. A pipe according to any preceding Claim characterised in that the insulating coating (3, 4) comprises alternating layers of plastic with or without high density material incorporated therein.

6. A method for the production of steel pipes for underwater use characterised in that an insulating coating (3, 4) of foamed and/or compact polypropylene or polyvinyl chloride is applied to a pipe (1) by extrusion.

7. A method as claimed in Claim 6 characterised in that a material of relatively high density is incorporated in the coating.

8. A method according to Claim 6 or 7 characterised in that alternating layers of foamed and/or compact thermoplastic with or without high density material incorporated are extruded onto the pipelines.

9. A method according to any of Claims 6-8 characterised in that the thermoplastic is foamed by means of chemical foaming agents.

## Ansprüche

1. Stahlrohr zum Transportieren von Kohlenwasserstoffen, wobei das Rohr eine äussere Isolationsbeschichtung aus Thermoplast hat, dadurch gekennzeichnet, dass die Beschichtung (3, 4) aus geschäumtem und/oder kompaktem Polypropylen- oder Polyvinylchlorid in vollständigem Oberflächenkontakt mit der äusseren Oberfläche des Rohres (1) oder mit der Oberfläche einer korrosionsbeständigen/klebenden Beschichtung (2), die darauf aufgebracht ist, steht.

2. Rohr nach Anspruch 1, dadurch gekennzeichnet, dass die Beschichtung durch Strangpressen aufgebracht worden ist.

3. Rohr nach Anspruch 1 oder 2, dadurch gekennzeichnet, dass ein Material relativ hoher Dichte in den Kunststoff einarbeitet ist, um beizutragen, dass die Lage der Rohrleitung auf dem Meeresboden beibehalten wird.

4. Rohr nach Anspruch 3, dadurch gekennzeichnet, dass das Material ein Mineral hoher Dichte ist.

5. Rohr nach einem der vorhergehenden Ansprüche, dadurch gekennzeichnet, dass die isolierende Beschichtung (3, 4) abwechselnde Schichten von Kunststoff mit oder ohne darin eingearbeitetem Material hoher Dichte umfasst.

6. Verfahren zur Herstellung von Stahlrohren zur Unterwasserbenutzung, dadurch gekennzeichnet, dass eine isolierende Beschichtung (3, 4) aus geschäumtem und/oder kompaktem Polypropylen- oder Polyvinylchlorid auf ein Rohr (1) durch Strangpressen aufgebracht wird.

7. Verfahren nach Anspruch 6, dadurch gekennzeichnet, dass das Material relativ hoher Dichte in der Beschichtung eingearbeitet ist.

8. Verfahren nach Anspruch 6 oder 7, dadurch gekennzeichnet, dass abwechselnde Schichten von geschäumtem und/oder kompaktem Thermoplast mit oder ohne darin eingearbeitetem Material hoher Dichte auf die Rohrleitungen stranggepresst werden.

9. Verfahren nach einem der Ansprüche 6-8, dadurch gekennzeichnet, dass der Thermoplast mit Hilfe von chemischen Schäummitteln geschäumt wird.

## Revendications

1. Tuyau d'acier pour le transport des hydrocarbures, ledit tuyau ayant un revêtement extérieur isolant en thermoplastique, caractérisé en ce que le revêtement (3, 4) de mousse ou feuille compacte de polypropylène ou de chlorure de polyvinyl est entièrement en contact avec la surface extérieure du tuyau (1) ou la surface d'un revêtement (2) adhésif résistant à la corrosion qui lui est appliqué.

2. Tuyau selon la Revendication 1, caractérisé en ce que le revêtement est appliqué par extrusion.

3. Tuyau selon la Revendication 1, caractérisé en ce qu'une matière de densité relativement élevée est incorporée au plastique de manière à le maintenir en place sur le fond marin.

4. Tuyau selon la Revendication 3, caractérisé en ce que la matière est une matière minérale de haute densité.

5. Tuyau selon l'une ou l'autre des revendications précédentes, caractérisé en ce que le revêtement isolant (3, 4) comporte des couches alternantes de plastique avec ou sans matière de haute densité incorporée.

6. Procédé de production de tuyaux d'acier pour exploitation sous-marine, caractérisé en ce qu'une couche isolante (3, 4) de mousse/feuille compacte de polypropylène ou chlorure de polyvinyl est appliquée à un tuyau (1) par extrusion.

7. Procédé selon la revendication 6, caractérisé en ce qu'une matière de densité relativement élevée est incorporée au revêtement.

8. Procédé selon la revendication 6 ou 7, caractérisé en ce que des couches alternantes de mousse ou de feuille compacte de thermoplastique avec ou sans matière de haute densité incorporée sont extrudées sur les conduits.

9. Procédé selon l'une des revendications 6-8, caractérisé en ce que la mousse thermoplastique est obtenue avec des produits chimiques mousseurs.

Fig 1